# FASCICULE DE BREVET EUROPEEN

(11) **EP 1 312 079 B1**
(45) Date de publication et mention de la délivrance du brevet: **14.12.2005**
(21) Numéro de dépôt: 01963112.6
(22) Date de dépôt: 20.08.2001
(51) Int. Cl.: G11B 5/00

(54) **SUPPORT D'ENREGISTREMENT OPTIQUE MULTI-NIVEAU A PUITS THERMIQUE TRANSPARENT POUR SYSTEME DE LECTURE/ECRITURE PAR LASER**
MIT THERMISCHER SENKE VERSEHENER MEHRSTUFIGER TRANSPARENTER OPTISCHER AUFZEICHNUNGSTRÄGER
MULTILEVEL OPTICAL RECORDING MEDIUM WITH TRANSPARENT HEAT SINK FOR LASER READ/WRITE SYSTEM

(30) Priorité: 21.08.2000 FR 0010762
(43) Date de publication de la demande: 21.05.2003
(73) Titulaire: COMMISSARIAT A L'ENERGIE ATOMIQUE, 75752 Paris Cédex 15 (FR); MPO International, 53700 Averton (FR)
(72) Inventeur: FARGEIX, Alain, F-38240 MEYLAN (FR); ROLLAND, Bernard, F-38240 MEYLAN (FR); GEHANNO, Véronique, F-38000 GRENOBLE (FR); BRUNEAU, Jean-Michel, F-38470 VINAY (FR)
(74) Mandataire: Ilgart, Jean-Christophe
(86) Numéro de dépôt international: PCT/FR2001/002634
(87) Numéro de publication internationale: WO 2002/017304

(56) Documents cités:
- EP-A- 0 566 107
- EP-A- 0 626 682
- EP-A- 0 810 590
- US-A- 5 652 036
- PATENT ABSTRACTS OF JAPAN vol. 016, no. 493 (P-1435), 13 octobre 1992 (1992-10-13) & JP 04 177625 A (NIPPON TELEGR & TELEPH CORP), 24 juin 1992 (1992-06-24)
- PATENT ABSTRACTS OF JAPAN vol. 013, no. 009 (P-811), 11 janvier 1989 (1989-01-11) & JP 63 217542 A (MATSUSHITA ELECTRIC IND CO LTD), 9 septembre 1988 (1988-09-09)

## Description

### Domaine de l'invention

L'invention concerne un support d'enregistrement optique à puits thermique transparent ayant plusieurs niveaux susceptibles d'être enregistrés, et/ou ré-enregistrés, au moyen d'un système de lecture/écriture laser.

L'invention trouve des applications dans tous les domaines de l'enregistrement optique, où l'on cherche à stocker une grande quantité de données sur un support optique, tel qu'un disque optique. En particulier, l'invention trouve des applications dans les domaines de la HI-FI et de la vidéo pour le stockage de données numériques de sons et d'images ou dans le domaine de la réalisation de mémoires pour ordinateurs.

### Etat de la technique

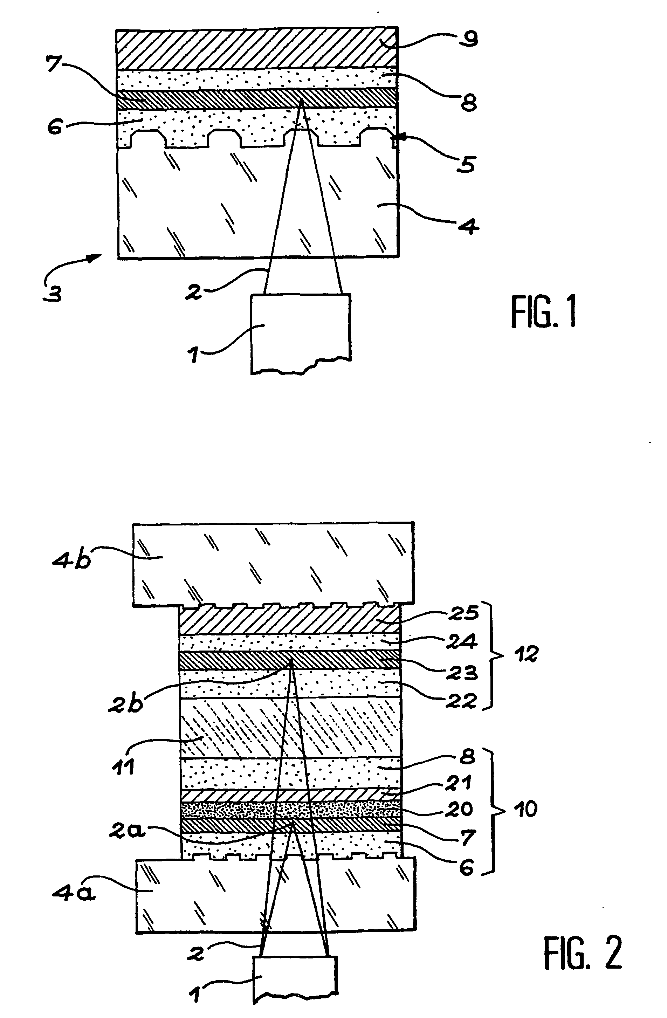

La figure 1 représente schématiquement un système classique d'enregistrement d'informations, de type optique. Ce système d'enregistrement comporte une tête optique, référencée 1, apte à émettre un faisceau laser 2.

Ce système d'enregistrement d'informations comporte aussi un support d'enregistrement d'informations, référencé 3. Celui-ci comporte, classiquement, un substrat 4 transparent au faisceau lumineux émis par la tête optique 1, et un ensemble de couches superposées au-dessus du substrat transparent 4.

Plus précisément, le support d'enregistrement 3 comporte :
- une première couche diélectrique 6 placée au-dessus du substrat transparent 4 ;
- une couche mémoire 7, placée au-dessus de la première couche diélectrique 6 ;
- une seconde couche diélectrique 8 placée sur la couche mémoire ; et
- une couche d'absorption thermique et de réflexion de la lumière, référencée 9.

La couche mémoire 7, ou couche de matériau à changement de phase, constitue la couche d'enregistrement des informations. Cette couche mémoire 7 peut être réalisée dans un matériau, tel que du Ge₂Sb₂Te₅, qui a la particularité de pouvoir se présenter dans un état cristallin ou bien dans un état amorphe. Les informations enregistrées dans la couche 7 sont codées par une succession de zones qui sont, soit dans un premier état physique (état cristallin), soit dans un second état physique (état amorphe). Ce codage dans l'un ou l'autre état physique est obtenu par un échauffement plus ou moins fort des zones, de façon à faire passer le matériau d'un état amorphe à un état cristallin, ou l'inverse. Plus précisément, l'état amorphe métastable est obtenu par fusion, puis trempe thermique du matériau à changement de phase ; l'état cristallin est obtenu par un recuit de l'état amorphe. Par exemple, la fusion est obtenue en portant le matériau à changement de phase au-dessus de sa température de fusion, c'est-à-dire au-dessus d'environ 600°C, par l'utilisation d'un niveau élevé de puissance laser (typiquement de 11 mW) et la cristallisation est obtenue en portant ce matériau à une température intermédiaire (de l'ordre de 350°C), en utilisant un niveau moyen de puissance laser (typiquement 5 mW). En modulant la puissance laser entre la puissance de niveau élevée et la puissance de niveau moyen, avec des durées variables, on génère un signal d'écriture qui inscrit, sur la couche de matériau à changement de phase, la succession des données par réalisation d'états cristallins et d'états amorphes, de longueurs variables, alignés les uns derrière les autres, le long d'une piste prégravée (référencée 5 sur la figure 1).

La lecture peut être faite par la même source laser 1, maintenue à une puissance basse (de l'ordre de 1 mW).

Pour obtenir des capacités de stockage et des débits de lecture/écriture sur les disques optiques élevés, il est nécessaire de réaliser des domaines de petites tailles, illuminés par le faisceau laser pendant des temps très courts. Dans le cas du DVD (Digital Versatile Disk), la taille du domaine le plus petit possible est d'environ 0,5 µm, c'est-à-dire de l'ordre de grandeur du diamètre de la tache d'Airy (diamètre minimum pouvant être obtenu en champ lointain, défini par la théorie de la diffraction), afin d'être encore résolu convenablement lors de la lecture ; le temps d'exposition d'un point du disque, par le spot laser, est d'environ 100 ns.

Or, une caractéristique critique d'un matériau à changement de phase est sa vitesse de cristallisation qui doit être suffisamment élevée, afin d'obtenir un effacement du domaine amorphe en moins de 100 ns. A contrario, un matériau avec une telle vitesse de cristallisation impose une trempe thermique rapide, lorsque le faisceau laser est éteint. Si tel n'est pas le cas, le domaine amorphe est mal résolu, voire inexistant. Dans ce dernier cas, la zone fondue à la puissance de niveau élevé sera effacée dynamiquement lors du refroidissement. Les vitesses de trempe compatibles avec l'enregistrement optique sont de l'ordre de 10°C/ns. Elles sont obtenues en positionnant un puits thermique tout près de la couche mémoire en matériau à changement de phase. Généralement, ce puits thermique est un métal, qui est utilisé aussi comme réflecteur, afin d'augmenter le rendement d'absorption de la lumière dans la couche mémoire.

La structure représentée sur la figure 1 permet d'atteindre ces résultats.

En effet, dans cette structure, le substrat 4 est transparent, ce qui permet une défocalisation des poussières qui, alors, ne sont plus vues comme des défauts. La couche diélectrique 6 permet d'ajuster les propriétés optiques du disque comme la réflectivité et sert de bouclier thermique protégeant le substrat 4, notamment lorsque celui-ci est en plastique.

La couche 7 de matériau à changement de phase, appelée aussi « couche mémoire », assure l'enregistrement de données sous forme d'une succession de zones amorphes et cristallines.

La couche diélectrique 8 joue le rôle d'une résistance de contrôle du flux thermique qui part de la couche à changement de phase 7 vers le réflecteur et puits thermique 9. Cette couche diélectrique 8 permet de piloter la vitesse de trempe pour l'amorphisation et d'ajuster les puissances d'écriture et d'effacement.

Enfin, la couche 9 formant le réflecteur et le puits thermique assure, d'une part, la réflexion du faisceau lumineux pour augmenter le rendement d'absorption de la lumière dans la couche de matériau à changement de phase 7 et, d'autre part, assure l'absorption de la chaleur, générée par le faisceau laser, dans la couche à changement de phase 7, et qui a traversé la seconde couche diélectrique 8.

Actuellement, on cherche à augmenter considérablement le nombre de données à mémoriser ; il est donc nécessaire d'augmenter la capacité du disque optique. Cela peut se faire grâce à une structure multi-niveau, qui permet l'enregistrement d'informations sur plusieurs couches mémoire, c'est-à-dire sur plusieurs couches de matériau à changement de phase, chaque niveau comportant sa propre couche mémoire. Un tel support d'enregistrement a été décrit dans la demande de brevet EP-A-0 810 590 et est représenté sur la figure 2.

Le support d'enregistrement de ce brevet comporte un premier substrat 4a et un second substrat 4b, séparés par un premier ensemble de couches formant un premier niveau d'enregistrement 10 et un second ensemble de couches formant un second niveau d'enregistrement 12. Le premier niveau 10 est un niveau semi-transparent et le second niveau 12 est un niveau profond ; ils sont séparés l'un de l'autre par une couche 11 de colle optiquement active. Cette couche de colle 11 assure, d'une part, la liaison entre le niveau semi-transparent et le niveau profond et, d'autre part, le découplage optique des deux niveaux d'enregistrement, afin que les informations d'un niveau ne gêne pas la lecture de l'autre niveau. Pour cela, cette couche de colle doit avoir une épaisseur importante (de l'ordre de 50 µm, pour la technologie DVD).

Dans ce système d'enregistrement, la tête optique 1 focalise le faisceau laser 2 sur l'un ou l'autre des niveaux 10 ou 12. On a représenté, sur la figure 2, le même faisceau laser lorsqu'il est focalisé sur le niveau transparent 10 (dans ce cas, il porte la référence 2a), ou sur le niveau profond 12 (dans ce cas il est référencé 2b). Quand le faisceau laser 2 est focalisé sur un des niveaux, la profondeur de champ est telle que les autres couches de la structure sont complètement défocalisées et donc que leurs détails sont tellement moyennés qu'ils ne perturbent pas l'écriture et/ou la lecture du niveau d'enregistrement concerné.

Dans cette structure, le niveau profond 12 est identique au support montré sur la figure 1. Le rôle de chacune des quatre couches formant ce niveau (première couche diélectrique 22, couche mémoire 23, seconde couche diélectrique 24 et réflecteur 25) est identique, respectivement, à celui des couches 6, 7, 8 et 9 décrites pour la figure 1. Le substrat 4a joue le même rôle que le substrat 4 ; quant au substrat 4b, il assure simplement un maintien mécanique de l'ensemble.

Le niveau semi-transparent comporte une couche de résistance thermique 20 et une couche d'absorption thermique 21, placées entre la couche mémoire 7 et la seconde couche diélectrique 8.

Dans cette structure, le rôle de la couche de résistance thermique 20 est d'assurer le contrôle du flux thermique, partant de la couche de matériau à changement de phase 7, vers la couche d'absorption thermique 21. Cette couche 20 permet également de piloter la vitesse de trempe pour l'amorphisation et les puissances d'écriture et d'effacement.

La couche 21 de puits thermique permet d'étaler la chaleur générée dans la couche de matériau à changement de phase, et ayant traversé la couche de résistance thermique.

Dans une telle structure, il est nécessaire que chaque niveau intermédiaire transmette suffisamment de lumière pour que le niveau le plus profond, c'est-à-dire le niveau 12, puisse être lu et enregistré. Pour cela, il est nécessaire que la couche 21 formant le puits thermique soit réalisée dans un matériau transparent ou tout au moins très peu absorbant. Par exemple, ce matériau peut être du carbure de silicium ou bien certains nitrures, comme le AIN et le Si₃N₄, ou encore certains oxydes, comme le ITO.

Cependant, de par les caractéristiques intrinsèques d'absorption de la couche 7 de matériau à changement de phase, et donc du niveau moyen de transmission de la lumière qui en résulte, cette structure est limitée, en pratique, à deux niveaux d'enregistrement.

En outre, un puits thermique efficace pour assurer une bonne sur-écriture conduit à des déformations du disque ou à des micro-craquelures qui pénalisent les performances électriques.

Le document EP-A-0 810 590 propose aussi d'utiliser les matériaux de la couche mémoire avec une polarité inverse du standard, c'est-à-dire que le fond de la couche est amorphe et que l'écriture génère des zones cristallines. En effet, le fond amorphe de la couche mémoire transmet bien la lumière, ce qui permet d'écrire successivement sur les niveaux les plus profond vers les moins profonds, avec une bonne transmission (donc une bonne réserve de puissance) et une grande latitude, car une cristallisation partielle ne gène pas les performances.

Une fois écrits, les différents niveaux peuvent être lus en ajustant les gains des signaux et/ou en modifiant la puissance laser de lecture. Cependant, cette structure n'est pas utilisable dans un système avec réenregistrement. En effet, dans un dispositif multi-niveau réenregistrable, la transmission du niveau chute d'un facteur 2 environ, après écriture et les performances de sur-écriture restreignent fortement la latitude sur la puissance d'effacement (ou recristallisation).

D'autre part, pour être efficace, la couche réalisant le puits thermique doit avoir une épaisseur à peu près égale à 2 fois celle de la couche mémoire. Ainsi, dans une structure à un seul puits thermique telle que décrite précédemment, cette épaisseur est souvent élevée pour faire adhérer cette couche de puits thermique aux couches situées au-dessous. Or, le matériau constitutif du puits thermique a des contraintes mécaniques intrinsèques en tension et en compression élevées qui font que la force de cisaillement qui leur est proportionnelle, dépasse le seuil de rupture. De telles structures posent des problèmes de stabilité. Des micro-craquelures peuvent apparaître aléatoirement à la surface du disque, perturbant les signaux électriques. Ces craquelures peuvent même entraîner le décollement total de la structure.

Par ailleurs, un disque compact effaçable est décrit dans l'article « The Feasibility of a CD-compatible Erasable Disc », de J. H. COOMBS et al., Technical Digest of 1994 Optical Data Storage Conference, TuC2-1, p. 59-60. Ce disque comporte une structure MIPIM (Metallique, Interferometrique, A changement de phase, Interferométrique, Métallique), dont l'une des couches métalliques est placée avant la couche de matériau à changement de phase, pour améliorer la transmission optique du faisceau laser. Cependant, cette structure ne permet pas d'assurer la trempe car cette couche métallique est positionnée avant la première couche diélectrique et, par conséquent, trop loin de la couche mémoire. Cette couche métallique a donc uniquement une fonction optique dans la structure.

### Exposé de l'invention

L'invention a justement pour but de remédier aux inconvénients des supports d'enregistrement décrits précédemment. A cette fin, elle propose un support d'enregistrement optique multi-niveau réenregistrable ayant une bonne tenue mécanique. Ce support garde toute la souplesse sur les empilements des niveaux semi-transparents, afin d'optimiser les caractéristiques de chaque niveau d'enregistrement, aussi bien du point de vue de la réflectivité que du contraste, de la transmission et de la balance thermique (c'est-à-dire le rapport d'absorption de lumière entre l'état cristallin du matériau à changement de phase et son état amorphe).

De façon plus précise, l'invention propose un support d'enregistrement optique multi-niveau pour système de lecture/écriture par faisceau laser, comportant au moins un substrat ainsi qu'un ensemble de couches formant un niveau d'enregistrement profond, et au moins un niveau d'enregistrement semi-transparent, chacun de ces niveaux ayant deux états stables réversibles sous l'effet d'un rayonnement laser. Ce support se caractérise par le fait que le niveau d'enregistrement semi-transparent comporte une couche de matériau à changement de phase et au moins une couche d'absorption thermique, placée devant la couche de matériau à changement de phase de sorte que le faisceau laser traverse la couche d'absorption thermique avant d'atteindre le matériau à changement de phase.

Selon un mode de réalisation de l'invention, le support d'enregistrement comporte une première et une seconde couches d'absorption thermique, situées de part et d'autre de la couche de matériau à changement de phase. Ce mode de réalisation a l'avantage d'être stable mécaniquement.

Avantageusement, la couche d'absorption thermique est en un matériau transparent à la lumière et de conductivité thermique élevée.

Par exemple, la couche d'absorption thermique peut être en SiC, AIN, Si₃N₄, ou en ITO.

Selon un mode de réalisation de l'invention, la couche d'absorption thermique et la couche de matériau à changement de phase sont séparées par une couche de résistance thermique.

### Brève description des figures

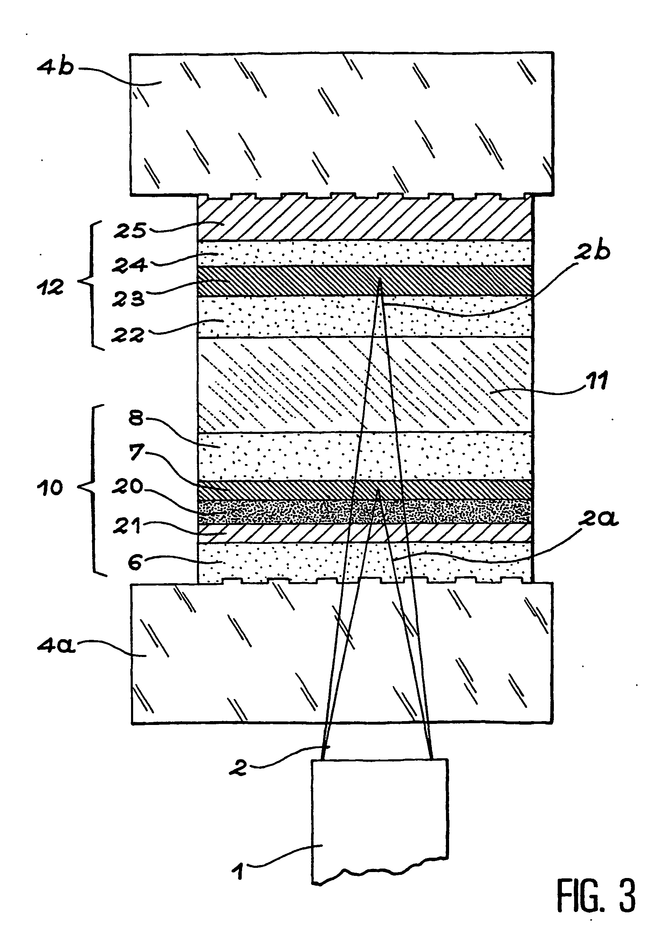

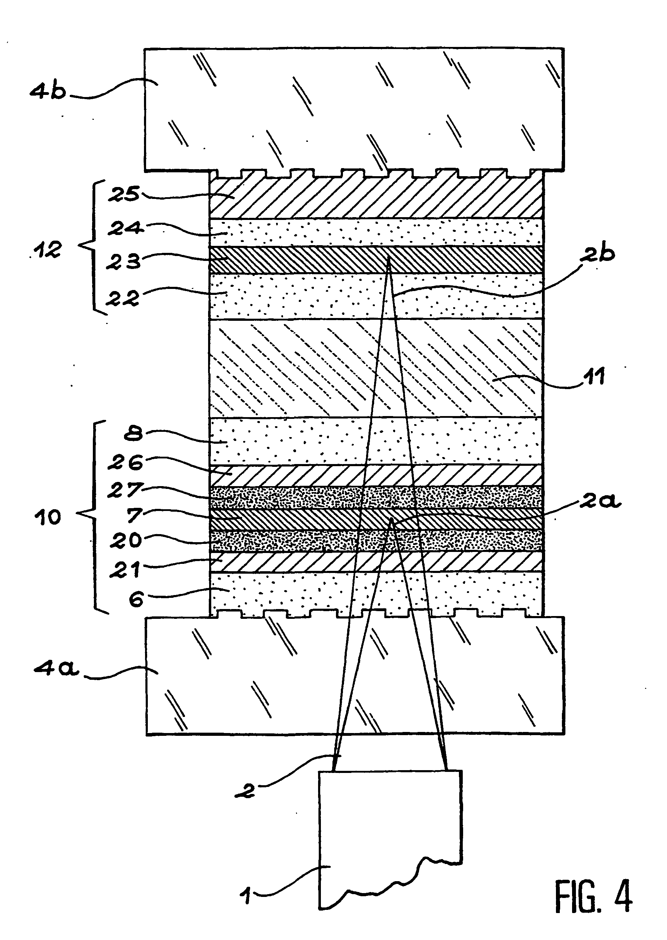

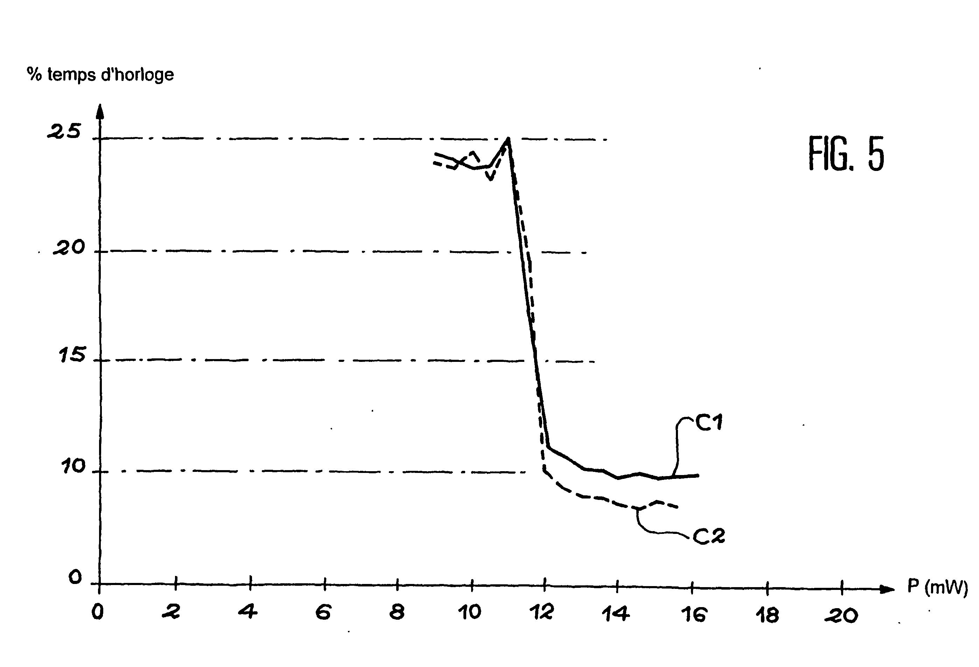

La figure 1, déjà décrite, représente schématiquement un support d'enregistrement à puits thermique classique ; la figure 2, déjà décrite, représente schématiquement un support d'enregistrement à puits thermique, à deux niveaux, connu ; la figure 3 représente schématiquement un support d'enregistrement multi-niveau, conforme à l'invention ; la figure 4 représente une variante du support d'enregistrement de l'invention ; et la figure 5 représente les courbes du jitter pour le dispositif de l'invention et pour le dispositif de l'art antérieur.

### Description détaillée de modes de réalisation de l'invention

L'invention propose un support d'enregistrement optique à puits thermique ayant au moins deux niveaux d'enregistrement susceptibles d'être effacés et réenregistrés.

Le support d'enregistrement de l'invention est représenté schématiquement sur la figure 3. Sur cette figure, les couches de matériau qui sont identiques aux couches des structures connues, déjà décrites portent des références identiques.

Le support d'enregistrement multi-niveau de la figure 3 comporte un premier substrat 4a ayant un rôle de défocalisation et un second substrat 4b ayant un rôle de maintien, entre lesquels sont placés un niveau d'enregistrement profond 12 et un niveau d'enregistrement semi-transparent 10, séparés tous deux par une épaisse couche de colle optiquement active, référencée 11.

Il est à noter, toutefois, que le support de l'invention peut être réalisé avec un seul substrat, la rigidité de l'ensemble pouvant être obtenue par un choix judicieux des matériaux formant les différents niveaux d'enregistrement.

Dans le mode de réalisation de la figure 3, le niveau d'enregistrement profond 12 est strictement identique au niveau d'enregistrement profond de la structure montrée sur la figure 2. Il ne sera donc pas décrit de façon plus détaillée. De même, la couche 11 de colle optiquement active a le même rôle que dans le support d'enregistrement de la figure 2 ; elle ne sera donc pas décrite à nouveau.

L'invention réside dans le niveau d'enregistrement semi-transparent 10, qui comporte différentes couches de matériau, associées de façon spécifique pour permettre, non seulement l'enregistrement sur la couche mémoire 23 du niveau profond 12, mais qui permet également d'effacer les enregistrements effectués sur les couches mémoire des différents niveaux d'enregistrement, puis de réécrire sur ces couches mémoire.

Plus précisément, le niveau d'enregistrement semi-transparent 10 du support de l'invention comporte une première couche diélectrique 6, placée au-dessus du premier substrat 4a, et recouverte d'une couche d'absorption thermique 21 formant un puits thermique, elle-même recouverte d'une couche 20 de résistance thermique, puis d'une couche mémoire 7, et d'une seconde couche diélectrique 8.

Comme on l'a vu précédemment, dans les structures des supports d'enregistrement connus, la couche d'absorption thermique 21, formant le puits thermique, est placée après la couche 7 de matériau à changement de phase.

Au contraire, dans la structure de l'invention, cette couche d'absorption thermique 21 est placée avant la couche 7 de matériau à changement de phase, de façon à ce qu'elle soit traversée par le faisceau laser, avant que celui-ci n'atteigne la couche 7 de matériau à changement de phase.

Cette structure permet d'ajuster la vitesse de trempe plus facilement (vitesse comprise entre 10°C/ns et 150°C/ns).

Dans la structure de l'invention, la couche d'absorption thermique 21 est réalisée dans un matériau qui est non seulement transparent aux rayons lumineux (ce qui permet la focalisation du faisceau laser sur les niveaux d'enregistrement plus profonds), mais qui a aussi une conductivité thermique élevée. Cette couche d'absorption thermique. 21 peut être réalisée, par exemple, dans du SiC ou bien du AIN, du Si₃N₄ ou encore du ITO. De tels matériaux ont l'avantage d'être, d'une part, transparents à la lumière et donc de ne pas gêner l'incidence du faisceau de lumière et, d'autre part, d'être bons conducteurs de chaleur pour absorber la chaleur provenant de la couche mémoire. Un choix judicieux des indices (stoechiométries et matériaux) et de l'épaisseur de la couche d'absorption thermique permet d'ajuster au mieux les caractéristiques optiques (telles que la réflectivité, le contraste, la balance thermique et la transmission) et les caractéristiques électriques-dynamiques du niveau considéré ; il permet, en particulier, d'obtenir un jitter (c'est-à-dire l'écart-type de la durée des signaux de lecture qui dépassent un seuil prédéterminé) plus faible que celui obtenu dans les structures de l'art antérieur.

Sur la figure 5, on a représenté la courbe d'évolution du jitter (en % de temps d'horloge) par rapport à la puissance d'écriture (en mW) pour un support d'enregistrement à 2 niveaux conforme à l'invention et pour le support d'enregistrement de l'art antérieur décrit précédemment. Sur cette figure, la courbe C1 représente le jitter pour l'art antérieur ; la courbe C2 représente le jitter pour la structure de l'invention. On voit que le jitter de C2 est plus faible que celui de C1 et qu'il est, par conséquent, meilleur.

Par exemple, pour réaliser le niveau semi-transparent d'un disque optique réincriptible, on peut choisir comme diélectrique, aussi bien pour la couche 6 que pour la couche 8, du ZnS/SiO₂ à 70 %/30 %, avec une épaisseur de 120 nm pour la couche 6 et de 110 nm pour la couche 8. On peut choisir, pour cet exemple, un puits thermique en SiC d'une épaisseur de 10 nm et une couche de résistance thermique 20 de 10 nm d'épaisseur dans le même matériau que les couches diélectriques. La couche mémoire 7, c'est-à-dire la couche à matériau à changement de phase, peut être réalisée en GeSbTe 2/2/5 d'une épaisseur de 7 nm.

A titre d'exemple, on peut proposer aussi un niveau profond 12 dans lequel les deux couches de diélectriques 22 et 24 sont réalisées dans le même matériau que les couches de diélectrique du niveau d'enregistrement semi-transparent, mais avec des épaisseurs respectives de 100 nm et de 40 nm. Dans ce niveau profond 12, la couche 23 de matériau à changement de phase peut être réalisée dans le même matériau que la couche de matériau à changement de phase du niveau d'enregistrement semi-transparent, mais avec une épaisseur de 27 nm. Enfin, la couche 25 formant le réflecteur et le puits thermique peut être réalisée en Al d'une épaisseur de 80 nm.

Dans un tel exemple, la transmission du niveau d'enregistrement semi-transparent est d'environ 55 % lorsque le matériau à changement de phase est amorphe et d'environ 35 % lorsqu'il est cristallin. La transmission moyenne du niveau d'enregistrement semi-transparent est alors d'environ 45 %, lorsqu'il est entièrement écrit.

Dans une telle structure, les réflectivités cristallines sont d'environ 18 % pour le niveau semi-transparent et de 8 % pour le niveau profond. Le contraste du niveau semi-transparent est faible (environ 20 %) alors que celui du niveau profond est élevé (environ 50 %). Les balances thermiques, (c'est-à-dire les rapports d'absorption de la lumière dans la couche mémoire, entre l'état cristallin et l'état amorphe) sont de 1,3 pour le niveau semi-transparent et de 0,9 pour le niveau profond. Dans un tel exemple, les puissances d'écriture optimum pour la tête optique sont : normale pour le niveau semi-transparent (c'est-à-dire environ 12 mW) et élevée pour le niveau profond (c'est-à-dire environ 18 mW).

La figure 4 représente schématiquement une variante du support d'enregistrement de l'invention. Dans cette variante, la couche de matériau à changement de phase 7 est entourée de deux couches d'absorption thermique 21 et 26, chacune de ces couches d'absorption thermique étant associée à une couche de résistance thermique, respectivement 20 et 27. Ces deux couches 21 et 26 peuvent avoir une épaisseur du même ordre de grandeur que celle de la couche mémoire 7.

L'avantage d'une telle structure à deux puits thermiques prenant en sandwich la couche mémoire, est de faciliter la trempe du matériau formant cette couche mémoire. En effet, en l'absence de puits thermique, la chaleur générée dans la couche de matériau à changement de phase diffuserait de manière égale, vers le milieu entrant et vers le milieu sortant. Les puits thermiques, de part et d'autre de la couche de matériau à changement de phase, captent la chaleur et accélèrent très fortement cette diffusion.

Cette structure à deux puits thermiques a l'avantage aussi d'être plus stable mécaniquement et, donc, de meilleure qualité.

Dans le second mode de réalisation de l'invention, on peut choisir, par exemple, les différentes couches de la façon suivante : les couches diélectriques 6 et 8, ainsi que les couches de résistance thermique 20 et 27 peuvent être réalisées en ZnS/SiO₂, à raison de 70 %/30 % ; elles peuvent avoir une épaisseur de 120 nm pour la couche 6, de 110 nm pour la couche 8, de 10 nm pour la couche 20 et de 10 nm pour la couche 27. Les couches d'absorption thermique formant les puits thermiques 21 et 26 peuvent être en SiC, d'une épaisseur de 5 nm chacune. Enfin, la couche 7 de matériau à changement de phase peut être réalisée en GeSbTe, à raison de 2/2/5, d'une épaisseur de 7 nm.

Le niveau profond peut être choisi identique à celui donné dans l'exemple du premier mode de réalisation. On obtient alors, comme dans le premier mode de réalisation, une transmission du niveau transparent moyen de l'ordre d'environ 45 % et des caractéristiques sensiblement identiques à celles données pour l'exemple du premier mode de réalisation.

Le fait de placer une couche d'absorption thermique avant la couche mémoire, dans le sens de propagation du faisceau laser (cas de la figure 3), ou de placer une couche d'absorption avant et une couche d'absorption après la couche mémoire (cas de la figure 4), permet de mieux gérer les problèmes liés aux contraintes mécaniques qui induisent des craquelures dans les couches ou qui aboutissent à des déformations du disque optique. Le voile radial ou axial du disque, lorsqu'il est fini, est une spécification importante qui est donnée dans chaque norme de disque optique. Ces caractéristiques sont d'autant plus critiques et difficiles à tenir que le substrat est déformable, par exemple s'il est en plastique, et que le collage est optiquement actif (par exemple, dans le cas des DVD multi-niveau).

L'invention vient d'être décrite pour des structures à deux niveaux d'enregistrement, mais il est bien entendu qu'elle peut être réalisée pour des structures à n niveaux ; dans ce cas, il y a un niveau profond et n - 1 niveaux semi-transparents. La réalisation de plusieurs niveaux est rendue possible car le taux de transmission moyen d'un niveau semi-transparent assure une bonne focalisation sur les couches de matériau à changement de phase de tous les niveaux semi-transparents intermédiaires traversés par le faisceau laser avant d'atteindre le niveau profond.

Le support d'enregistrement de l'invention, quel que soit son mode de réalisation, peut être réalisé de la façon suivante :
* pour chaque niveau semi-transparent :
   - réalisation d'une matrice dans le sens conventionnel : le sens conventionnel est imposé par la norme pour un disque simple niveau. Dans le cas de la norme de disque réinscriptible simple niveau DVD + RW, la spirale que décrivent les pistes suit le sens de rotation opposé aux aiguilles d'une montre, vu du côté entrant du laser. Ce sens est le contraire de celui qui est donné à la machine de lithographie qui insole les pistes ;
   - réalisation du substrat : le substrat est obtenu par injection de polycarbonate (ou PMMA) à chaud et haute pression dans un moule ;
   - dépôt de l'empilement de la couche mémoire avec puits thermique : soit cinq couches pour le mode de réalisation de la figure 3 ou sept couches pour celui de la figure 4 ;
   - initialisation : dans notre exemple, l'initialisation, c'est-à-dire la cristallisation de toute la surface du disque est réalisée avant collage ; elle peut toutefois être envisagée après collage ;
* dans le cas de plusieurs niveaux semi-transparents :
   - dépôt d'un espaceur (d'une épaisseur d'environ 50 um) ;
   - gravure de pistes sur la surface libre de l'espaceur ;
   - dépôt de l'empilement puis initialisation de chaque niveau de manière itérative en repartant du dépôt de l'espaceur ;
* pour le niveau d'enregistrement profond :
   - réalisation d'une matrice dans le sens inverse : si le sens conventionnel décrit précédemment est gardé, la spirale que décrivent les pistes suivra le sens de rotation des aiguilles d'une montre, vu du côté entrant du laser, le disque une fois fini. Comme il n'est pas question de changer le sens de rotation du moteur, il faut donc inscrire sur le disque une spirale inversée ;
   - réalisation du substrat : le substrat est obtenu par injection de polycarbonate à chaud et haute pression dans un moule ;
   - dépôt de l'empilement de couches mémoire : soit quatre couches ;
   - initialisation : dans notre exemple, l'initialisation, c'est-à-dire la cristallisation de toute la surface du disque, est réalisée avant collage ;
* collage : il faut coller les deux parties, c'est-à-dire le niveau profond et l'ensemble des niveaux semi-transparents, en les tenant séparés d'environ 50 µm. La colle étant traversée par le faisceau laser, elle doit être d'une qualité optique excellente. De plus, les axes de rotation des deux disques doivent être parfaitement confondus, afin d'éviter des excentrations ;
* test : on réalise d'abord un test en ligne où des mesures rapides globales sont réalisées, généralement par mesure optique (du type défaut de diffraction, etc.), puis un test approfondi sur des testeurs dynamiques hors ligne.

## Revendications

1. Support d'enregistrement optique multi-niveau pour système de lecture/écriture par faisceau laser, comportant au moins un substrat (4a, 4b) ainsi qu'un ensemble de couches formant un niveau profond (12), et au moins un niveau semi-transparent (10), chacun de ces niveaux ayant deux états stables réversibles sous l'effet d'un rayonnement laser,
**caractérisé en ce que** le niveau semi-transparent comporte une couche (7) de matériau à changement de phase et au moins une couche (21) d'absorption thermique placée devant la couche de matériau à changement de phase, de sorte que le faisceau laser traverse la couche d'absorption thermique avant d'atteindre le matériau à changement de phase.

2. Support d'enregistrement selon la revendication 1, **caractérisé en ce qu'**il comporte une première et une seconde couches d'absorption thermique (21, 26) situées de part et d'autre de la couche de matériau à changement de phase.

3. Support d'enregistrement selon la revendication 1 ou 2, **caractérisé en ce que** la couche d'absorption thermique est en un matériau transparent à la lumière et de conductivité thermique élevée.

4. Support d'enregistrement selon la revendication 3, **caractérisé en ce que** la couche d'absorption thermique est en SiC, AIN, Si₃N₄ ou en ITO.

5. Support d'enregistrement selon l'une quelconque des revendications 1 à 4, **caractérisé en ce que** la couche d'absorption thermique et la couche de matériau à changement de phase sont séparées par une couche de résistance thermique (20, 27).

## Patentansprüche

1. Optischer Mehrebenen-Aufzeichnungsträger für Laserstrahl-Schreib-Lesesystem, mit wenigstens einem Substrat (4a, 4b) sowie einem eine tiefe Ebene (12) und wenigstens eine semi-transparente Ebene (10) bildenden Schichtenaufbau, wobei jede dieser Ebenen zwei stabile, unter der Wirkung eines Laserstrahls umkehrbare Zustände hat,
**dadurch gekennzeichnet, dass** die semi-transparente Ebene eine Schicht aus Phasenübergangsmaterial (7) und wenigstens eine vor der Phasenübergangsmaterialschicht befindliche Wärmeabsorptionsschicht (21) umfasst, so dass der Laserstrahl vor dem Erreichen des Phasenübergangsmaterials die Wärmeabsorptionsschicht durchquert.

2. Aufzeichnungsträger nach Anspruch 1, **dadurch gekennzeichnet, dass** er eine erste und eine zweite Wärmeabsorptionsschicht (21, 26) umfasst, die beiderseits der Phasenübergangsmaterialschicht angeordnet sind.

3. Aufzeichnungsträger nach Anspruch 1 oder 2, **dadurch gekennzeichnet, dass** die Wärmeabsorptionsschicht aus einem lichtdurchlässigen Material mit einer hohen Wärmeleitfähigkeit ist.

4. Aufzeichnungsträger nach Anspruch 3, **dadurch gekennzeichnet, dass** die Wärmeabsorptionsschicht aus SiC, AlN, Si₃N₄ oder aus ITO ist.

5. Aufzeichnungsträger nach einem der Ansprüche 1 bis 4, **dadurch gekennzeichnet, dass** die Wärmeabsorptionsschicht und die Phasenübergangsmaterialschicht durch eine Wärmedurchgangswiderstandsschicht (20, 27) getrennt sind.

## Claims

1. Multi-level optical recording medium for a read/write system using a laser beam, comprising at least one substrate (4a, 4b) and a set of layers forming a deep level (12), and at least one semi-transparent level (10), each of these levels having two stable states reversible under the effect of laser radiation,
**characterised in that** the semi-transparent level comprises a layer (7) of phase change material and at least one heat absorption layer (21) placed in front of the layer of phase change material, such that the laser beam passes through the heat absorption layer before reaching the phase change material.

2. Recording medium according to claim 1, **characterised in that** it comprises a first and second layer (21, 26) of heat absorption material located on each side of the layer of phase change material.

3. Recording medium according to claim 1 or 2, **characterised in that** the heat absorption layer is a material transparent to light with a high thermal conductivity.

4. Recording medium according to claim 3, **characterised in that** the heat absorption layer is made of SiC, AlN, Si₃N₄ or ITO.

5. Recording medium according to any one of claims 1 to 4, **characterised in that** the heat absorption layer and the layer of phase change material are separated by a thermal resistance layer (20, 27).
